# EUROPEAN PATENT APPLICATION

(11) **EP 2 161 484 A2**
(43) Date of publication of application: **10.03.2010**
(21) Application number: 09380148.8
(22) Date of filing: 25.08.2009
(51) Int. Cl.: F16K 11/074

(54) **Device for the controlled distribution of liquids**

(30) Priority: 05.09.2008 ES 200802557
(71) Applicant: Valvules i Racords Canovelles, S.A., 08530 La Garriga (Barcelona) (ES)
(72) Inventor: Puiggros Roig, Armand, 08530 La Garriga(Barcelona) (ES)
(74) Representative: Morgades y Manonelles, Juan Antonio

(57) **Abstract**

Device for the controlled distribution of liquids. It comprises a base body (1) with multiple compartments which has various inlets and outlets, closed with a cover (2). This device is characterised by having a valve in the inside of the body of the base that is made up of two overlapping ceramic disks (4,5) that have two sets of openings (6,7), central ones (6) for controlling the inlet and outlet of the liquid being treated, and other peripheral ones (7) for the control of the reclaiming of the product used for the treatment. The lower disk (4) is joined to the body of the compartmentalised base (8), and the upper disk (5) is joined to the opening of a turning obturator bell (10) with a central opening (13) and several peripheral slots (14) that correspond to the peripheral openings (7) of the disks (4,5). The body of the base (1) forms a transversal peripheral chamber (15) that houses the mechanism for the control of the reclaiming of the product of the treatment.

## Description

### OBJECT OF THE INVENTION

Device for the controlled distribution of liquids.

### FIELD OF THE INVENTION

This device is applied to the treatment of water where a valve system is used to control the aforementioned treatment and that of the reclaiming of the product used in said treatment.

### BACKGROUND TO THE INVENTION

Different valve systems for this double function are already known, generally used to remove lime or soften water using a resin as a treatment product and brine as reclaiming material, an operation performed in counter flow.

These valve systems are usually very complex, based on multi-line valves with a piston inside the valve body opening and closing lines.

### SUMMARY OF THE INVENTION

The object of this invention is a device for the controlled distribution of liquids, which has a very simplified, compact structure that operates efficiently, and which is prepared to carry out the reclaiming of the product (resin) used in the treatment in counter flow or with the flow, as appropriate.

This device comprises a base body with multiple compartments which has various inlets and outlets, closed with a cover, and is characterised by having a valve in the inside of the body of the base that is made up of two overlapping ceramic disks that have two sets of openings, central ones for controlling the inlet and outlet of the water being treated, and other peripheral ones for the control of the reclaiming of the product (resin) used for the treatment. The lower disk is joined to the body of the compartmentalised base, and the upper disk is joined to the opening of a turning obturator bell with a central opening and several peripheral slots that correspond to the peripheral openings of the disks. The body of the base forms a transversal peripheral chamber that houses the mechanism for the control of the reclaiming of the product (resin) of the water treatment.

The means for the control of the reclaiming of the treatment product (resin) consist of two cartridges with lengthwise ducts with radial outputs and of a Venturi tube, one of the cartridges being foreseen for the reclaiming of the treatment product (resin), acting with the flow of the water, and the other cartridge for carrying out the aforementioned reclaiming in counter flow.

The body of the base is made up of an inlet of the water to be treated and an outlet of the water already treated, in which there is a turbine, a ring with the turbine support axle, and a turn detector.

In the aforementioned transversal duct, there is a filter in the opening of the cartridge, and another filter at the opposite end of the aforementioned transversal duct, where the communication to the tank for the material (brine) used for the reclaiming of the treatment product (resin) is located.

These and other characteristics will be best made apparent by the following detailed description whose understanding will be made easier by the accompanying four sheets of drawings showing a practical embodiment being cited only by way of an example not limiting the scope of the present invention.

### DESCRIPTION OF THE DRAWINGS

In the drawings:

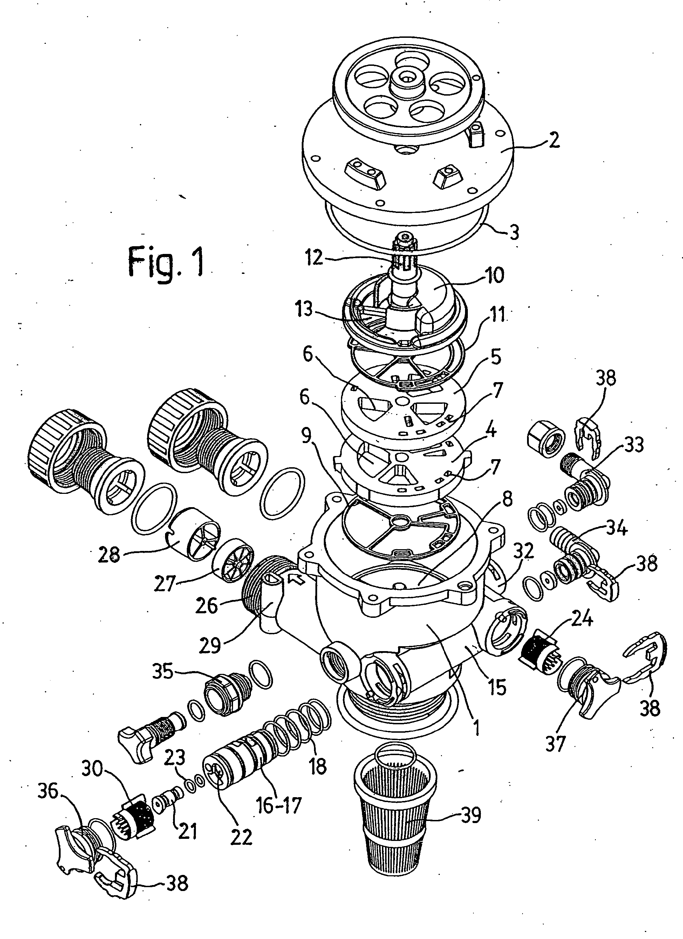

Figure 1 shows a cross section of the device that is the object of the invention taken apart,

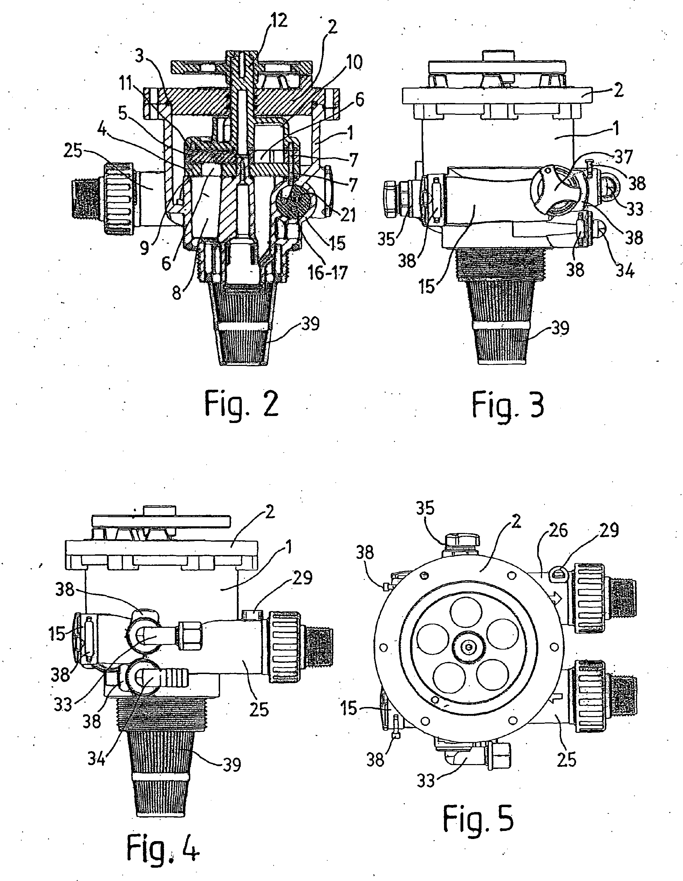

figures 2, 3, 4 and 5 show this device in sectional elevation, from the rear and side and from a plan view, respectively,
figure 6 represents a lower cross section view of the obturator bell,
figure 7 shows a cross section view of the two ceramic disks,
figure 8 shows a longitudinal cross section of the transversal duct where one of the cartridges that controls the reclaiming of the product used in the treatment is located,
figures 9 and 10 represent, respectively, a longitudinal cross section of the cartridge and a diagram of operation corresponding to the reclaiming in counter flow, and
figures 11 and 12 represent, respectively, a longitudinal cross section of the cartridge and a diagram of operation corresponding to the reclaiming with the flow.

### DETAILED DESCRIPTION OF ONE FORM OF PREFERRED EMBODIMENT

According to the drawings, the device for the controlled distribution of liquids is made up of a cylindrical base body (1) with multiple compartments that has various inlets and outlets and which is closed with a cover (2) with an o-ring (3) in it.

On the inside of the base body (1), there is a valve made up of two overlapping ceramic disks (4 and 5) placed face to face, straight and polished to establish a waterproof contact, which have sets of central openings (6) to control the inlet and outlet of the water being treated, and another set of smaller peripheral openings (7), for the control of the reclaiming of the resin used for the treatment.

The lower disk (4) is joined on the compartmentalised base (8) by way of a seal (9), and the upper disk (5) is joined by a seal (11) to the lower opening of a turning obturator bell (10).

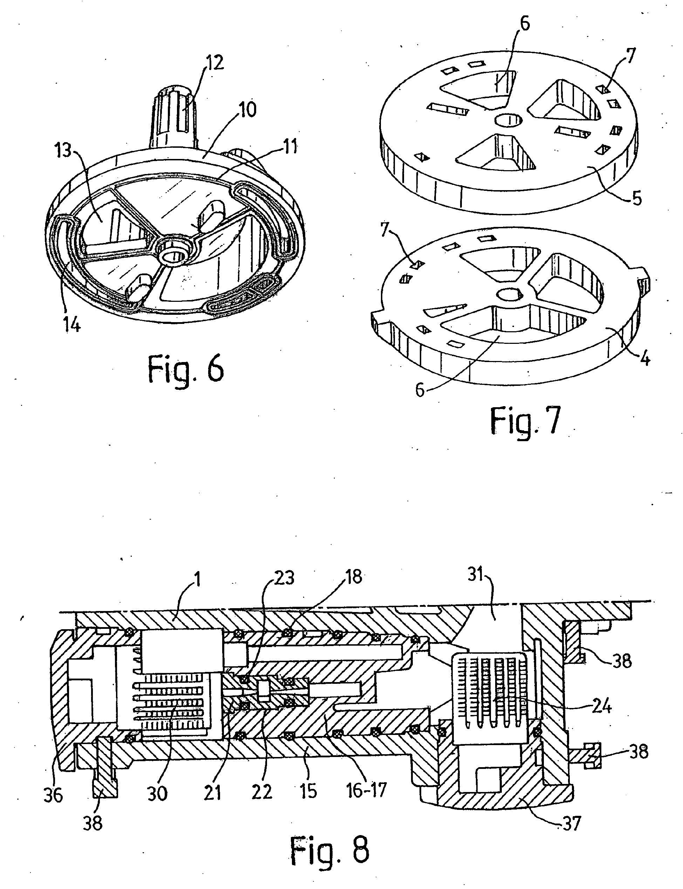

The aforementioned bell has a grooved shaft (12) to receive, through the corresponding gears, the action of the driving means; a central opening (13) that corresponds to the central openings (6) of the disks (4 and 5), and several peripheral slots (14) (figure 6) in correspondence with the peripheral openings (7) of the disks.

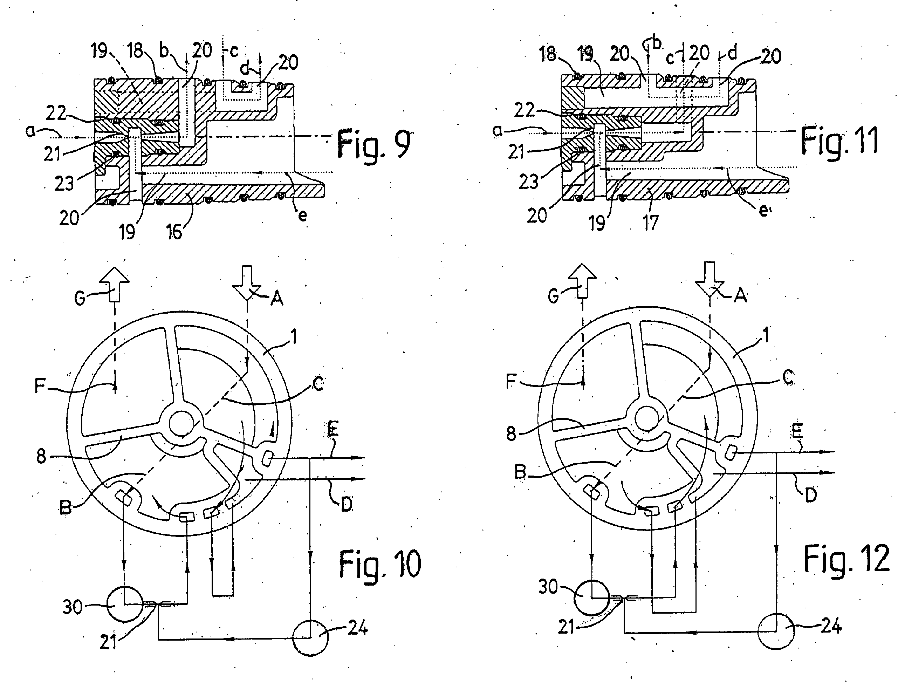

The base body (1) comprises the forming of a transversal peripheral chamber (15) where the means for the control of the reclaiming of the resin of the water treatment is housed. This mechanism consists of two cartridges (16, 17) with peripheral o-ring joints (18) and that have lengthwise ducts (19) with radial outlets (20) (figures 9 and 11) and a Venturi tube (21) housed in a hole (22) using o-ring joints (23). Of these cartridges, (16) carries out the reclaiming of the resin in counter flow, and cartridge (17) carries out said reclaiming with the flow.

In cartridges (16 and 17) the arrows indicate: (a) inlet, (b) lower grated nozzle, (c) upper grated nozzle, (d) drains, and (e) brine aspiration.

Figure 9 is complemented by figure 10, and figure 11 is complemented by figure 12, which shows a diagram of the circulation of the liquids, and the arrows indicate: (A) water inlet, (B) lower grated nozzle, (C) upper grated nozzle, (D) drains, (E) brine, (F) service and (G) water outlet. With references (21 and 24) the filters of each are indicated.

On the base body are (1) the inlet (25) of the water to be treated and the outlet (26) of the water already treated, in which there is a turbine (27), a ring (28) with the support axle of the turbine and a turn detector (29).

In the transversal duct (15) there is a filter (30) in the opening of the cartridges (16-17) and another filter (24) in the opposite end of said transversal duct, where there is a communication (31) (figure 8) to the tank of the brine used for the reclaiming of the treatment resin.

In the lower part of the base body (1) there is a radial drain opening (32).

The communication (31) and the drain (32) have the joints of their respective angular nozzles (33 and 34) in their openings, with adjustable mounting.

On the lower part of the base body (1), there are radial regulating means to regulate (35) the passage of water.

For the linkage of the lids (36 and 37), as well as of the nozzles (33 and 34) grips (38) that are easy to put in and take out are used.

In the lower opening of the base body (1) there is a filtering grated nozzle (39).

## Claims

1. Device for the controlled distribution of liquids, comprising a base body with multiple compartments which has various inlets and outlets, closed with a cover, and is **characterised by** having a valve in the inside of the body of the base that is made up of two overlapping ceramic disks that have two sets of openings, central ones for controlling the inlet and outlet of the liquid being treated, and other peripheral ones for the control of the reclaiming of the product used for the treatment. The lower disk is joined to the body of the compartmentalised base, and the upper disk is joined to the opening of a turning obturator bell with a central opening and several peripheral slots that correspond to the peripheral openings of the disks. The body of the base forms a transversal peripheral chamber that houses the mechanism for the control of the reclaiming of the product of the liquid treatment.

2. Device for the controlled distribution of liquids, according to claim 1, **characterised in that** the means for the control of the reclaiming of the treatment product consist of two cartridges with lengthwise ducts with radial outputs and of a Venturi tube, one of the cartridges being foreseen for the reclaiming of the treatment product, acting with the flow of the liquid, and the other cartridge for carrying out the aforementioned reclaiming in counter flow.

3. Device for the controlled distribution of liquids, according to claim 1, **characterised in that** the body of the base is made up of an inlet of the liquid to be treated and an outlet of the liquid already treated, in which there is a turbine, a ring with the turbine support axle, and a turn detector.

4. Device for the controlled distribution of liquids, according to claims 1 and 2, **characterised in that** the transversal duct, there is a filter in the opening of the cartridge, and another filter at the opposite end of said transversal duct, where the communication to the tank for the material used for the reclaiming of the treatment product is located.

5. Device for the controlled distribution of liquids, according to claim 1, **characterised in that** in the lower part of the base body there is a radial drain opening.

6. Device for the controlled distribution of liquids, according to claims 4 and 5, **characterised by** having the communication to the tank of the material used for the reclaiming of the treatment product, and the opening of the drain, made up of the joining of adjustable nozzles.

7. Device for the controlled distribution of liquids, according to claims 1 and 3, **characterised in that** the lower part of the base body have regulator means for the passage of the water.
